# EUROPÄISCHE PATENTSCHRIFT

(11) **EP 1 071 689 B1**
(45) Veröffentlichungstag und Bekanntmachung des Hinweises auf die Patenterteilung: **03.07.2002**
(21) Anmeldenummer: 99919184.4
(22) Anmeldetag: 01.04.1999
(51) Int. Cl.: C07F 15/00, C08G 67/02, B01J 31/24

(54) **CIS-VERBRÜCKTE METALLKOMPLEXE UND DIESE ENTHALTENDE KATALYSATORSYSTEME**
CIS-BRIDGED METAL COMPLEXES AND CATALYST SYSTEMS CONTAINING THE SAME
COMPLEXES METALLIQUES PONTES EN CIS ET SYSTEMES CATALYSEURS LES CONTENANT

(30) Priorität: 14.04.1998 DE 19816190
(43) Veröffentlichungstag der Anmeldung: 31.01.2001
(73) Patentinhaber: BASF AKTIENGESELLSCHAFT, 67056 Ludwigshafen (DE)
(72) Erfinder: QUEISSER, Joachim, D-68165 Mannheim (DE); SLANY, Michael, D-67281 Kirchheim (DE); SCHÄFER, Ansgar, D-76137 Karlsruhe (DE); SCHULZ, Michael, D-67067 Ludwigshafen (DE)
(86) Internationale Anmeldenummer: EP9902282
(87) Internationale Veröffentlichungsnummer: WO9952917

(56) Entgegenhaltungen:
- EP-A- 0 121 965
- CHEMICAL ABSTRACTS, vol. 124, no. 12, 18. März 1996 Columbus, Ohio, US; abstract no. 163206, SERINDAG, OSMAN ET AL: "Synthesis of sulfonated aminomethylphosphines and some nickel(II), palladium(II), platinum(II) and rhodium(I) complexes. Crystal structure o [Et3NH][(Ph2PCH2)2N(CH2)2SO3]" XP002108086 & TRANSITION MET. CHEM. (LONDON) (1995), 20(6), 548-51 CODEN: TMCHDN;ISSN: 0340-4285,1995,

## Beschreibung

Die vorliegende Erfindung betrifft cis-verbrückte Metallkomplexe der allgemeinen Formel (I) 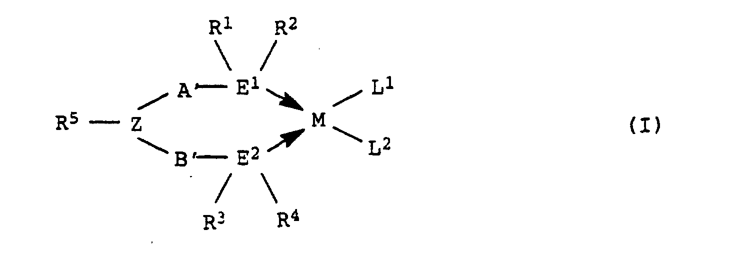 in welcher die Substituenten und Indizes die folgende Bedeutung haben:
- R⁵: ein elektronenziehender Rest,
- M: ein Metall aus der Gruppe VIIIB des Periodensystems der Elemente,
- E¹, E²: ein Element aus der Gruppe VA des Periodensystems der Elemente,
- Z: Stickstoff oder Phosphor,
- R¹ bis R⁴: Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
- A', B': C₁-C₄-Alkyleneinheiten in substituierter und unsubstituierter Form, silylenverbrückte organische Reste sowie NR⁶-Reste,
- R⁶: Wasserstoff oder Substituenten, ausgewählt aus der Gruppe bestehend aus C₁- bis C₂₀-kohlenstofforganischen und C₃- bis C₃₀-siliciumorganischen Resten, und
- L¹,L²: formal geladene Liganden.

Weiterhin betrifft die vorliegende Erfindung ein Verfahren zur Herstellung solcher Metallkomplexe sowie deren Verwendung als wesentliche Bestandteile von Katalysatorsystemen zur Copolymerisation von Kohlenmonoxid mit olefinisch ungesättigten Verbindungen.

Des weiteren betrifft die Erfindung Katalysatorsysteme, enthaltend als aktive Bestandteile a) einen cis-verbrückten Metallkomplex der Formel (I) und b) eine oder mehrere Lewis- oder Protonensäuren oder ein Gemisch von Lewis- oder Protonensäuren. Außerdem betrifft die vorliegende Erfindung Verfahren zur Herstellung von Copolymerisaten aus Kohlenmonoxid und olefinisch ungesättigten Monomerverbindungen sowie die Verwendung von Katalysatorsystemen auf der Basis von cis-verbrückten Metallkomplexen der Formel (I) für die Herstellung von Copolymerisaten aus Kohlenmonoxid und olefinisch ungesättigten Monomerverbindungen. Schließlich betrifft die Erfindung die Verwendung der erfindungsgemäß erhaltenen Copolymerisate für die Herstellung von Fasern, Folien, Formkörpern und Beschichtungen sowie die Fasern, Folien, Formkörper und Beschichtungen.

Katalysatorsysteme für die Herstellung von Copolymerisaten aus Kohlenmonoxid und olefinisch ungesättigten Verbindungen sind bekannt. Als aktive Katalysatorbestandteile werden im allgemeinen mit bidentaten Phosphinliganden chelatisierte cis-Palladiumkomplexe wie [Pd(R₂P(CH₂)ₙPR₂) (OAc)₂] eingesetzt (vgl. EP 0 121 965). Für die Copolymerisation von Kohlenmonoxid mit Ethylen und/oder Propylen haben sich als Liganden insbesondere bidentate Phosphinliganden mit einer Propylenverbrückung bewährt, wobei bevorzugt Katalysatorsysteme mit zum Beispiel [(dmppp)Pd(OAc)₂](BF₄)₂ als Metallkomplex zum Einsatz kommen (dmppp = 1,3-Bis{di(2-methoxyphenyl)phosphino}propan) (vgl. J. Organomet. Chem. 1991, 417, S. 235 ff).

Die Herstellung geeigneter Ligandsysteme wie 1,3-Bis{di(2-methoxyphenyl)phosphino}propan) oder 1,3-Bis{diphenylphosphino}propan (dppp) erfordert allerdings die Handhabung äußerst reaktiver sowie hochentzündlicher und toxischer Verbindungen. Für-die Darstellung von z.B. alkylenverbrückten Phosphinliganden ist daher in der Regel ein hoher apparativer Aufwand erforderlich. Aus sicherheitstechnischen Erwägungen ist insbesondere auch die großtechnische Herstellung nicht unproblematisch. Darüber hinaus sind unsymmetrisch substituierte alkylenverbrückte Liganden, d.h. solche mit unterschiedlichen Phosphinsubstituenten oder mit unterschiedlichen chelatisierend wirkenden Atomen ausgehend von Dibrom- oder Dichlor-terminierten Alkylenverbindungen nur bedingt zugänglich. Im übrigen sind Strukturanaloga der genannten Chelatliganden, selbst wenn sie nur geringfügig von einer bekannten Struktur abweichen, häufig nicht auf gleichem oder ähnlichem Wege zu erhalten, sondern erfordern eine aufwendige, eigenständige Synthese.

In den deutschen Patentanmeldungen DE-A-19651685 und DE-A-19651786 werden cis-verbrückte Metallkomplexe bzw. Katalysatorsysteme auf der Basis dieser Komplexe beschrieben, mit denen den geschilderten Problemen abgeholfen wird. Die verwendeten Komplexe zeichnen sich insbesondere dadurch aus, daß in den bidentaten Chelatliganden eine Amino- oder Phosphinofunktionalität integriert ist. Diese Systeme sind ebenfalls für die kovalente Anbindung an ein Trägermaterial geeignet.

Von Nachteil bei den genannten Systemen ist, daß die Katalysätoraktivität bei längeren Reaktionszeiten, insbesondere wenn bei erhöhter Temperatur copolymerisiert wird, nicht immer konstant gehalten werden kann.

Der vorliegenden Erfindung lag daher die Aufgabe zugrunde, Metallkomplexe bzw. Katalysatorsysteme auf Basis dieser Komplexe für die Copolymerisation von Kohlenmonoxidcopolymeren zu finden, die auch bei längerer Polymerisationsdauer eine gleichbleibend gute Katalysatoraktivität gewährleisten, ohne dabei die Vorteile stickstoff- oder phosphorverbrückter Ligandsysteme einzubüßen, und reproduzierbar gute Ausbeuten liefern.

Demgemäß wurden die eingangs definierten cis-verbrückten Metallkomplexe gefunden. Des weiteren wurde ein Verfahren zur Herstellung dieser Metallkomplexe sowie die Verwendung der definierten Metallkomplexe (I) als wesentliche Bestandteile von Katalysatorsystemen, die für die Copolymerisation von Kohlenmonoxid mit olefinisch ungesättigten Verbindungen geeignet sind, gefunden.

Weiterhin betrifft die Erfindung Katalysatorsysteme, enthaltend als aktive Bestandteile a) einen cis-verbrückten Metallkomplex der Formel (I) und b) eine oder mehrere Lewis- oder Protonensäuren oder ein Gemisch von Lewis- oder Protonensäuren, Verfahren zur Herstellung von Copolymerisaten aus Kohlenmonoxid und olefinisch ungesättigten Monomerverbindungen sowie die Verwendung von Katalysatorsystemen auf der Basis von cis-verbrückten Metallkomplexen für die Herstellung von Copolymerisaten aus Kohlenmonoxid und olefinisch ungesättigten Monomerverbindungen. Außerdem betrifft die Erfindung die Verwendung der erfindungsgemäß erhaltenen Copolymerisate für die Herstellung von Fasern, Folien, Formkörpern und Beschichtungen sowie die Fasern, Folien, Formkörper und Beschichtungen.

Als Metalle M der erfindungsgemäßen Metallkomplexe eignen sich die Metalle der Gruppe VIIIB des Periodensystems der Elemente, also neben Eisen, Cobalt und insbesondere Nickel vornehmlich die Platinmetalle wie Ruthenium, Rhodium, Osmium, Iridium und Platin sowie ganz besonders Palladium. Die Metalle können in den Komplexen formal ungeladen, formal einfach positiv geladen oder vorzugsweise formal zweifach positiv geladen vorliegen.

Als Elemente E¹ und E² der Chelatliganden
(R¹) (R²)E¹-A'-Z(R⁵)-B'-E²(R³) (R⁴) (II) der erfindungsgemäßen Metallkomplexe (I) kommen die Elemente der V. Hauptgruppe des Periodensystems der Elemente (Gruppe VA), also Stickstoff, Phosphor, Arsen, Antimon oder Bismut in Betracht. Besonders geeignet sind Stickstoff oder Phosphor, insbesondere Phosphor. Die Chelatliganden in (II) können unterschiedliche Elemente E¹ und E² darstellen, so kann zum Beispiel E¹ Stickstoff und E² Phosphor sein.

Die verbrückende Struktureinheit in den erfindungsgemäßen Metallkomplexen setzt sich aus den Komponenten A', B' und Z (s.a. Formeln (I) und (II)) zusammen. Unter einer verbrückenden Struktureinheit wird grundsätzlich eine mehratomige Gruppierung verstanden, die die Elemente E¹ und E² miteinander verbindet.

Als Komponente Z wird entweder Stickstoff oder Phosphor, insbesondere Stickstoff verwendet.

Die Einheiten A' und B' können jeweils unabhängig voneinander C₁- bis C₄-kohlenstofforganische sowie siliciumorganische Reste sein. Als kohlenstofforganische Reste sind C₁- bis C₄-Alkyleneinheiten in substituierter und unsubstituierter Form geeignet, zum Beispiel Methylen, Ethylen, Propylen sowie Ethyliden, Propyliden und Benzyliden. Bevorzugt werden Methylen, Ethylen, Ethyliden und Benzyliden, besonders bevorzugt Methylen eingesetzt.

Des weiteren können A' und B', ebenfalls unabhängig voneinander, Silylenreste bedeuten, beispielsweise -R^{a}-Si-R^{b}-, mit R^{a}, R^{b} als C₁- bis C₄-Alkyleneinheiten in substituierter und unsubstituierter Form, wie Methylen, Ethylen oder Ethyliden, Aryleneinheiten, insbesondere o-Phenylen, oder Aralkylideneinheiten, insbesondere Benzyliden, wobei die freien Valenzen am Silicium mit Alkylgruppen, wie Methyl, -i-Propyl oder t-Butyl, Arylgruppen, wie Phenyl, oder Aralkylgruppen, wie Benzyl, abgesättigt sein können.

A' und B' können auch eine -NR⁶-Einheit darstellen, in der -R⁶ Wasserstoff oder einen Substituenten, ausgewählt aus der Gruppe bestehend aus C₁- bis C₂₀-kohlenstofforganischen und C₃- bis C₃₀-siliciumorganischen Resten bedeutet, wie C₁- bis C₁₀-Alkyl, insbesondere Methyl, Ethyl, Aryl, insbesondere Phenyl, oder Aralkyl, insbesondere Benzyl.

A' und B' können ebenfalls ein ein-, zwei-, drei- oder vieratomiger Bestandteil eines aliphatischen oder aromatischen Ringsystems sein. Zum Beispiel können A' und B' eine Methylen- oder Ethyleneinheit eines Cyclopropyl-, Cyclopentyl- oder Cyclohexylrings darstellen. Als Ringsysteme kommen auch aliphatische und aromatische Heterocyclen in Betracht.

A' und B' können des weiteren Bestandteil eines Heterocyclus sein, der aus den Komponenten A'-Z-R⁵ bzw. B'-Z-R⁵ gebildet wird, d.h. A'-Z-R⁵ bzw. B'-Z-R⁵ können z.B. einen substituierten oder unsubstituierten Pyrrolidin- oder Piperidinring ausbilden.

Für den Fall einer einatomigen kohlenstofforganischen Verbrückung zwischen den Einheiten Z und E¹ bzw. E² stellen A' und B', unabhängig voneinander, bevorzugt eine -CR⁷R⁸-Einheit dar, worin R⁷ und R⁸, ebenfalls unabhängig voneinander, Wasserstoff, C₁- bis C₁₀-Alkyl, wie Methyl, Ethyl oder Propyl, C₆- bis C₁₄-Aryl, beispielsweise Phenyl, C₇- bis C₂₀-Aralkyl oder Heteroaryl, insbesondere Wasserstoff bedeuten können. Des weiteren kann die einatomige Verbrückung mit den Resten R⁷ und R⁸ ein Ringsystem wie Cyclopropyl, Cyclopentyl oder Cyclohexyl ausbilden. R⁷ und R⁸ sind bevorzugt Wasserstoff.

Als kohlenstofforganische Reste R¹ bis R⁴ kommen, unabhängig voneinander, z.B. aliphatische und cycloaliphatische sowie aromatische und heteroaromatische Reste mit 1 bis 20 C-Atomen in Betracht.

Als geradkettige aliphatische Reste sind u.a. geeignet Methyl, Ethyl, Propyl, Butyl, Pentyl, Hexyl und Octyl.

Als verzweigte aliphatische Reste eignen sich C₃- bis C₂₀-, vorzugsweise C₃- bis C₁₂-Alkylreste, wie die i-Propyl-, i-Butyl-, s-Butyl-, Neopentyl- und t-Butylgruppe, weiterhin Alkylaryl mit jeweils 1 bis 6 C-Atomen im Alkylrest und 6 bis 14 C-Atomen im Arylrest.

Besonders geeignete verzweigte aliphatische Reste sind die t-Butylgruppe, die i-Propylgruppe und die s-Butylgruppe.

Auch Alkylgruppen mit weiter außen liegender Verzweigung sind als Substituenten R¹ bis R⁴ gut geeignet, wie die i-Butyl-, die 3-Methyl-but-2-yl- und 4-Methylpentylgruppe.

Als cycloaliphatische Reste kommen z.B. C₃- bis C₁₀-Monocyclen wie beispielsweise die Cyclopropyl-, Cyclobutyl-, Cyclopentyl-, Cyclohexyl oder die Menthylgruppe sowie bicyclische Reste wie die Norbornyl-, Pinanyl-, Bornyl- und Bicyclononylgruppe in beliebiger Verknüpfung des Ringgerüstes mit den Atomen E¹ und E² in Betracht. Vorzugsweise enthalten die cycloaliphatischen Reste insgesamt 5 bis 20 C-Atome, ganz besonders bevorzugt sind Cyclohexyl und Menthyl.

Ferner sind lineare Arylalkylgruppen mit jeweils 1 bis 6 C-Atomen im Alkylrest und 6 bis 14 C-Atomen im Arylrest geeignet, wie beispielsweise Benzyl.

Als Arylreste kommen aromatische Systeme mit 6 bis 20 C-Atomen in substituierter und unsubstituierter Form in Frage, beispielsweise Phenyl, Tolyl, Xylyl, p-Trifluormethylphenyl oder Anisyl, bevorzugt werden Phenyl und o-Methoxyphenyl eingesetzt.

Als Heteroarylreste sind ganz allgemein C₃- bis C₂₀-Verbindungen geeignet, die vorzugsweise 1 bis 3 Stickstoffatome pro Ring enthalten, z.B. Pyridyl, Pyrimidyl, Pyrazinyl oder Triazinyl sowie mit Alkyl- oder Arylgruppen versehenes Heteroaryl.

Die Reste R¹ bis R⁴ können auch Atome aus der Gruppe IVA, VA, VIA oder VIIA des Periodensystems der Elemente enthalten, wie zum Beispiel Halogen, Sauerstoff, Schwefel, Stickstoff, Silicium, hier beispielsweise die Bis(trimethylsilyl)methylgruppe. Auch funktionelle Gruppen wie zum Beispiel Hydroxy, Alkoxy, Amino und Cyan, die sich unter den Polymerisationsbedingungen inert verhalten, kommen in diesem Zusammenhang in Betracht.

Bevorzugte Heterosubstituenten R¹ bis R⁴ sind auch C₃- bis C₃₀siliciumorganische Reste, das heißt tetravalente Siliciumatome die einerseits an E¹ oder E² gebunden sind und deren übrige Valenzen mit drei kohlenstofforganischen Resten abgesättigt sind, wobei die Summe der Kohlenstoffatome dieser drei an Silicium gebundenen Reste im Bereich von drei bis dreißig liegt. Beispielsweise seien genannt die Trimethylsilyl-, t-Butyldimethylsilyl- oder Triphenylsilylgruppe, insbesondere die Trimethylsilylgruppe.

Die Reste R¹ bis R⁴ sollten vorzugsweise soweit raumerfüllend sein, daß das Zentralatom, z.B. das Palladiumatom, mit dem die Atome E¹ und E² den aktiven Komplex bilden, weithin abgeschirmt wird. Reste, welche dieser Forderung genügen, sind beispielsweise cycloaliphatische Reste sowie verzweigte aliphatische Reste, darunter besonders solche mit Verzweigung in α-Position.

Die Reste R¹ bis R⁴ in einer Metallkomplexverbindung (I) können sowohl identisch vorliegen als auch nur paarweise übereinstimmen oder vollständig voneinander verschieden sein, d.h. R¹ ≠ R² ≠ R³ ≠ R⁴. In einer Ausführungsform stimmen die Reste R¹ und R² an E¹ bzw. R³ und R⁴ an E² jeweils überein, jedoch sind R¹, R² nicht identisch mit R³, R⁴.

Als elektronenziehende Substituenten R⁵ sind geeignet lineare oder verzweigte C₁- bis C₂₀-Alkylgruppen, die mit mindestens einer elektronenziehenden Gruppe substituiert sind, wobei die elektronenziehende Gruppe sich in α-, β-, γ- und/oder δ-Position, insbesondere in α- und/oder β-Position zu Z befindet, mit mindestens einer elektronenziehenden Gruppe substituierte C₆- bis C₁₄-Aryleinheiten sowie Nitril-, Sulfinyl (-SO₂R⁹), Sulfonyl- (-SO₃R⁹) und Nitrogruppen. Der Rest R⁹ kann C₁- bis C₂₀-Alkyl, insbesondere C₁- bis C₁₀-Alkyl wie Methyl, Ethyl oder i-Propyl oder C₆- bis C₁₄-Aryl, insbesondere Phenyl bedeuten. Des weiteren kann R⁵ einen Rest -C(O)R¹⁰ darstellen mit R¹⁰ in der Bedeutung von linearem oder verzweigtem C₁- bis C₂₀-Alkyl, C₆- bis C₁₄-Aryl oder Aralkyl mit 1 bis 10 C-Atomen im Alkylteil und 6 bis 14 C-Atomen im Arylteil, linearem oder verzweigtem C₁- bis C₂₀-Alkyl, das mit mindestens einer elektronenziehenden Gruppe substituiert ist, wobei die elektronenziehende Gruppe sich in α-, β-, γ- und/oder δ-Position zur C(O)-Gruppe befindet, sowie C₆- bis C₁₄-Aryl, das mit mindestens einer elektronenziehenden Gruppe substituiert ist.

Als elektronenziehende Substituenten an einem Alkyl- oder Arylrest R⁵ kommen Halogenatome wie Fluor, Chlor oder Brom, bevorzugt Fluor und Chlor und besonders bevorzugt Fluor in Frage. Die Alkyl- und Arylreste können sowohl partiell als auch perhalogeniert sein. Weiterhin sind die Nitro-, Nitril-, Ester-, Amid-, Sulfinyl-, Sulfonylamid- und Sulfonylgruppe als Substituenten für die Alkyl- und Arylreste geeignet. Die Arylreste können auch mit Trifluor- oder Trichlormethylgruppen sowie mit Ammoniumresten substituiert sein. Beispielhaft seien als geeignete Alkylreste R⁵ genannt: Trifluormethyl, Trichlormethyl, Difluormethyl, 2,2,2-Trifluorethyl, 2,2,2-Trichlorethyl, 3,3,3-Trifluorpropyl, Pentafluorethyl, Nitromethyl, 2-Nitroethyl und Cyanomethyl. Bevorzugt sind Trifluormethyl und 2,2,2-Trifluorethyl. Unter den geeigneten Arylresten R⁵ seien beispielhaft genannt:
p-, m-, o-Fluor- oder Chlorphenyl, 2,4-Difluorphenyl, 2,4-Dichlorphenyl, 2,4,6-Trifluorphenyl, 2,4,6-Dichlorphenyl, Nitrophenyl, 2,4-Dinitrophenyl, 2-Chlor-5-nitrophenyl, 2-Brom-5-nitrophenyl, Methylsulfinylphenyl und Methylsulfonylphenyl.

Des weiteren sind als elektronenziehender Rest R⁵ Reste -C(O)R¹⁰ geeignet, in denen R¹⁰ die Bedeutung von C₁- bis C₂₀-Alkyl, C₆- bis C₁₄-Aryl sowie die Bedeutung der vorhergehend unter R⁵ beschriebenen mit elektronenziehenden Gruppen substituierten C₁- bis C₂₀-Alkyl- und C₆- bis C₁₄-Arylgruppen annehmen kann. Bevorzugt als Reste R¹⁰ und u.a. Methyl, Ethyl, i-Propyl, Phenyl, Trifluormethylphenyl, Trifluormethyl oder Pentafluorethyl.

Bevorzugt stellt R⁵ einen mindestens disubstituierten Phenylrest wie 2,4-Difluor- oder 2,4-Dichlorphenyl oder einen partiell oder perfluorierten Alkylrest, bei dem sich mindestens zwei Fluoratome in α- oder β-Position zu Z befinden, wie Trifluormethyl oder 2,2,2-Trifluorethyl, dar.

Geeignete formal geladene anorganische Liganden L¹, L² sind Hydrid, Halogenide, Sulfate, Phosphate oder Nitrate. Des weiteren sind geeignet Carboxylate oder Salze organischer Sulfonsäuren wie Methylsulfonat, Trifluormethylsulfonat oder p-Toluolsulfonat. Unter den Salzen organischer Sulfonsäuren ist p-Toluolsulfonat bevorzugt. Als formal geladene Liganden L¹, L² sind Carboxylate, bevorzugt C₁- bis C₂₀-Carboxylate und insbesondere C₁- bis C₇-Carboxylate, also z.B. Acetat, Trifluoracetat, Propionat, Oxalat, Citrat oder Benzoat bevorzugt. Besonders bevorzugt ist Acetat.

Geeignete formal geladene organische Liganden L¹, L² sind auch C₁bis C₂₀-aliphatische Reste, C₃- bis C₃₀-cycloaliphatische Reste, C₇- bis C₂₀-Aralkylreste mit C₆- bis C₁₄-Arylresten und C₁- bis C₆-Alkylresten sowie C₆- bis C₂₀-aromatische Reste, beispielsweise Methyl, Ethyl, Propyl, i-Propyl, t-Butyl, n-, i-Pentyl, Cyclohexyl, Benzyl, Phenyl und aliphatisch oder aromatisch substituierte Phenylreste.

Grundsätzlich können die Liganden L¹ und L² in jeder beliebigen Ligandkombination vorliegen, d.h. der Metallkomplex (I) kann zum Beispiel einen Nitrat- und einen Acetatrest, einen p-Toluolsulfonat und einen Acetatrest oder einen Nitrat- und einen formal geladenen organischen Liganden wie t-Butyl enthalten. Bevorzugt liegen in den Metallkomplexen L¹ und L² als identische Liganden vor.

Von den Metallkomplexen der allgemeinen Formel (I) sind diejenigen bevorzugt, in denen die Substituenten folgende Bedeutung haben:
- M: Palladium,
- E¹, E²: Phosphor,
- Z: Stickstoff,
- R¹ bis R⁴: cycloaliphatische Reste, wie Cyclohexyl oder Menthyl, verzweigte aliphatische Reste, wie i-Propyl, s-Butyl oder t-Butyl, aromatische Reste, wie Phenyl, o-Methoxyphenyl oder p-Trifluormethylphenyl und heteroaromatische Reste, wie Pyridyl, besonders bevorzugt Phenyl, o-Methoxyphenyl und t-Butyl,
- R⁵: mit mindestens einer, bevorzugt mit mindestens zwei elektronenziehenden Gruppe(n) substituiertes lineares oder verzweigtes C₁- bis C₂₀-Alkyl, wobei die elektronenziehende Gruppe sich in α-, β-, γ- und/oder δ-Position zu Z befindet,
mit mindestens einer, bevorzugt mit mindestens zwei elektronenziehenden Gruppe(n) substituiertes C₆- bis C₁₄-Aryl,
-CN, -SO₂R⁹, -SO₃R⁹ oder -NO₂, mit R⁹ in der Bedeutung von C₁- bis C₁₀-Alkyl oder C₆- bis C₁₄-Aryl,
-C(O)R¹⁰ mit
- R¹⁰: lineares oder verzweigtes C₁- bis C₂₀-Alkyl, C₆- bis C₁₄-Aryl oder Aralkyl mit 1 bis 10 C-Atomen im Alkylteil und 6 bis 14 C-Atomen im Arylteil,
mit mindestens einer elektronenziehenden Gruppe substituiertes lineares oder verzweigtes C₁- bis C₂₀-Alkyl, wobei die elektronenziehende Gruppe sich in α-, β-, γ- und/oder δ-Position zur C(O)-Gruppe befindet, mit mindestens einer elektronenziehenden Gruppe substituiertes C₆- bis C₁₄-Aryl,
- A', B': Methylen oder Ethylen in substituierter und unsubstituierter Form, beispielsweise Ethyliden oder Propyliden, Benzyliden, o-Phenylen, insbesondere Methylen, und
- L¹, L²: Sulfate, Phosphate, Nitrate, Acetat, Trifluoracetat oder Tosylat, insbesondere Acetat.

Beispiele für besonders bevorzugte Metallkomplexe sind Bis(diphenylphosphinomethyl) (2,4-difluorphenyl)amin-palladium-bis-acetat und Bis(diphenylphosphinomethyl) (2,2,2-trifluorethyl)amin-palladium-bis-acetat.

Die Chelatliganden (II) können zur Herstellung der erfindungsgemäßen Metallkomplexe (I) verwendet werden.

Die Herstellung der Chelatliganden (II) kann wie beschrieben in A.L. Balch, M.M. Olmstead, S.P. Rowley, Inorg. Chim. Acta, 1990, 168, 255-264 bzw. J. Fawcett, P.A.T. Hoye, R.D.W. Kemmitt, D.J. Law, D.R. Russell, J. Chem. Soc., Dalton Trans. 1993, 2563 - 2568 erfolgen. Beispielsweise setzt man Diphenylphosphan mit Paraformaldehyd und 2,4-Difluorphenylamin in Toluol bei 65°C um und erhält nach einer Reaktionszeit von etwa 4 h das Chelatphosphan in hoher Ausbeute.

Die erfindungsgemäßen Metallkomplexe der allgemeinen Formel (I) können nach folgenden Verfahren hergestellt werden.

Die Herstellung erfolgt für die neutralen Metallkomplexe (I) durch Austausch von schwach koordinierenden Liganden, wie zum Beispiel 1,5-Cyclooctadien, Benzonitril oder Tetramethylethylendiamin, die an die entsprechenden Übergangsmetallverbindungen, beispielsweise Übergangsmetallcarboxylate oder Übergangsmetalldiorganyle, gebunden sind, gegen die Chelatliganden der allgemeinen Formel (II) in der vorhergehend beschriebenen Bedeutung.

Die Reaktion wird im allgemeinen in einem Lösungsmittel, wie beispielsweise Dichlormethan, bei Temperaturen im Bereich von -78 bis +40°C durchgeführt.

Des weiteren können neutrale Metallkomplexe (I), in denen L¹ und L² Carboxylat, z.B. Acetat, bedeuten, durch Umsetzung von beispielsweise Pd(OAc)₂ mit den beschriebenen Chelatliganden (II) in Toluol oder Aceton bei Raumtemperatur hergestellt werden.

Als weitere Synthesemethode kommt die Umsetzung der Chelatkomplexe der allgemeinen Formel (I) mit Organometallverbindungen der Gruppen IA, IIA, IVA und IIB in Frage, beispielsweise C₁- bis C₆-Alkyle der Metalle Lithium, Aluminium, Magnesium, Zinn, Zink, wobei formal geladene anorganische Liganden L¹, L² wie vorher definiert, gegen formal geladene aliphatische, cycloaliphatische oder aromatische Liganden L¹, L² wie ebenfalls vorher definiert, ausgetauscht werden. Die Reaktion wird im allgemeinen in einem Lösungsmittel, wie beispielsweise Diethylether oder Tetrahydrofuran bei Temperaturen im Bereich von -78 bis 65°C durchgeführt.

Die erfindungsgemäßen Metallkomplexe (I) können als wesentlicher Bestandteil von Katalysatorsystemen zur Herstellung von Copolymeren aus Kohlenmonoxid und olefinisch ungesättigten Verbindungen verwendet werden.

Geeignete Katalysatorsysteme enthalten als aktive Bestandteile
a) einen Metallkomplex (I), wie vorgehend beschrieben, und
b) eine oder mehrere Lewis- oder Protonensäuren oder ein Gemisch von Lewis- und/oder Protonensäuren.

Das Verhältnis der Katalysatorbestandteile zueinander wird im allgemeinen so gewählt, daß das molare Verhältnis von Metallkomplex (I) (Bestandteil a)) zu Lewis- und/oder Protonensäure (Bestandteil b)) im Bereich von 0,01:1 bis 10:1, bevorzugt im Bereich von 0,1:1 bis 1:1 liegt.

Unter den Bestandteil a) fällt sowohl der ausschließliche Metallkomplex (I) als auch eine Mischung, bestehend aus dem definierten Metallkomplex (I) und einem Anteil an freier Chelatverbindung (II). Das molare Verhältnis von Metallkomplex (I) zum Chelatliganden (II) liegt, sofern weitere Chelatverbindung zugesetzt wird, üblicherweise im Bereich von 0,01:1 bis 10:1, bevorzugt im Bereich von 0,05:1 bis 2:1.

Die erfindungsgemäßen Katalysatorsysteme können zur Herstellung von Copolymerisaten aus Kohlenmonoxid und olefinisch ungesättigten Monomerverbindungen verwendet werden. Die Monomere werden im allgemeinen alternierend in das Copolymer eingebaut.

Als olefinisch ungesättigte Monomerverbindungen kommen grundsätzlich alle Monomere dieser Verbindungsklasse in Betracht. Bevorzugt sind Ethylen und C₃- bis C₂₀-Alk-1-ene wie insbesondere Propen. Außerdem können Diene wie 1,4-Pentadien sowie daneben Cycloolefine wie Cyclopenten, Cyclohexen, Norbornen und Norbornadien und seine Derivate eingesetzt werden.

Unter den olefinisch ungesättigten aromatischen Monomeren seien in erster Linie Styrol und α-Methylstyrol genannt.

Geeignet sind ferner Acrylsäure und Methacrylsäure sowie deren Derivate, darunter insbesondere die Nitrile, die Amide und die C₁- bis C₆-Alkylester, wie beispielsweise Ethylacrylat, n-Butylacrylat, t-Butylacrylat, Methylmethacrylat.

Weitere geeignete Monomere sind Vinylchlorid, Vinylacetat, Vinylpropionat, Maleinsäureanhydrid und N-Vinylpyrrolidon.

Selbstverständlich können auch Mischungen verschiedener Monomere eingesetzt werden, wobei das Mischungsverhältnis im allgemeinen nicht kritisch ist.

Zur Herstellung von Copolymerisaten aus Kohlenmonoxid und olefinisch ungesättigten Monomerverbindungen können die Monomeren in Gegenwart des beschriebenen Katalysatorsystems copolymerisiert werden.

Als ein weiteres Verfahren zur Herstellung von Copolymerisaten aus Kohlenmonoxid und olefinisch ungesättigten Verbindungen kommt die Umsetzung der Monomeren in Gegenwart eines Katalysators in Frage, dessen aktive Masse gebildet wird aus
i) einem Metall M, ausgewählt aus der Gruppe VIIIB des Periodensystems der Elemente, das in Salzform oder als Komplexsalz vorliegt,
ii) einem Chelatliganden der allgemeinen Formel (II) 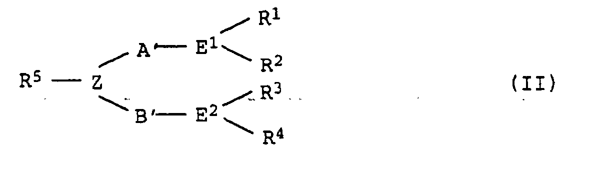 in welcher die Substituenten und Indizes die vorhergehend beschriebene Bedeutung haben, und
iii) einer oder mehrerer Protonen- oder Lewissäuren oder eines Gemisches von Protonen- und Lewissäure.

Als Salze von üblicherweise zweiwertigen Metallen M sind Halogenide, Sulfate, Phosphate, Nitrate und Carboxylate, wie Acetate, Propionate, Oxalate, Citrate, Benzoate, sowie Sulfonsäuresalze wie zum Beispiel Methylsulfonate, Trifluormethylsulfonat und p-Toluolsulfonat geeignet. Vorzugsweise verwendet man Carboxylate oder Sulfonsäurederivate, insbesondere Acetate.

Besonders geeignete Katalysatorkomponenten i) sind Palladiumdicarboxylate, vorzugsweise Palladiumdiacetat, Palladiumdipropionat, Palladiumbis(trifluoracetat) und Palladiumoxalat, sowie Palladiumsulfonate, vorzugsweise Palladiumbis(trifluormethansulfonat), Palladiumbis(methansulfonat), Palladiumbis(p-Toluolsulfonat), insbesondere verwendet man Palladiumdiacetat.

Als Katalysatorbestandteile b) bzw. iii) können Lewis- und Protonensäuren und deren Mischungen eingesetzt werden.

Geeignete Protonensäuren b) bzw. iii) sind starke Mineralsäuren, vorzugsweise mit einem pKₐ-Wert kleiner als 3 wie Schwefelsäure, Salpetersäure, Phosphorsäure, Tetrafluorborsäure und Perchlorsäure sowie starke organische Säuren, beispielsweise Trichlorund Trifluoressigsäure sowie die Sulfonsäuren Methansulfonsäure, p-Toluolsulfonsäure und Benzolsulfonsäure.

Weiterhin sind die sauer wirkenden Salze starker Säuren mit schwachen Basen, wie beispielsweise Ammoniumsalze der vorher genannten Säuren geeignet.

Bevorzugte Protonensäuren sind Schwefelsäure, Trifluoressigsäure und p-Toluolsulfonsäure.

Beispiele für geeignete Lewissäuren sind Halogenide der Elemente der Gruppe IIIA des Periodensystems der Elemente, zum Beispiel Bortrifluorid, Bortrichlorid, Aluminiumtrifluorid, Aluminiumtrichlorid, Halogenide der Elemente der Gruppe VA des Periodensystems der Elemente wie Phosphorpentafluorid, Antimonpentafluorid, sowie Halogenide der Metalle der Nebengruppe IVB des Periodensystems der Elemente, wie beispielsweise Titantetrachlorid oder Zirconiumtetrachlorid. Weitere geeignete Lewissäuren sind organisch substituierte Lewissäuren, zum Beispiel Tris(pentafluorphenyl)boran.

Vorzugsweise verwendet man als Lewis-Säuren Bortrifluorid, Antimonpentafluorid oder Tris(pentafluorphenyl)boran.

Bevorzugte Komponenten b) bzw. iii) sind auch solche, welche ein schwach koordinierendes konjugiertes Anion besitzen, d.h. ein Anion welches nur eine schwache Bindung zum Zentralmetall des Komplexes ausbildet, wie Tetrafluoroborat, Hexafluorophosphat, Perchlorat,Trifluoracetat, Trifluormethylsulfonat, p-Tosylat und Borate, wie Brenzkatechinatoborat und Tetraarylborat, wobei als Arylgruppe insbesondere 2,5-Dimethylphenyl-, 2,5-Di-trifluormethyl-phenyl- oder Pentafluorphenyl in Frage kommen.

Als Komponente ii) enthalten die Katalysatorsysteme eine Chelatverbindung (II), die bereits bei der Abhandlung des aktiven Bestandteils a) des erfindungsgemäßen Katalysatorsystems beschrieben wurde.

Bei der *in-situ* Generierung der Polymerisationskatalysatoren setzt man die Metalle M üblicherweise zweiwertig in Form ihrer Salze ein und bringt sie mit der Chelatverbindung ii) der allgemeinen Formel (II) und der/den Säuren iii) in Berührung. Dies kann vor dem Kontakt der so erhältlichen katalytisch aktiven Masse mit dem Monomeren geschehen, im allgemeinen außerhalb des Polymerisationsreaktors. Die Umsetzung der Einzelkomponenten Metallsalz i), Chelatverbindung ii) und Säure iii) kann aber auch im Polymerisationsreaktor in Gegenwart der Monomeren durchgeführt werden.

Das Verhältnis der Katalsatorbestandteile i), ii) und iii) zueinander wird im allgemeinen so gewählt, daß das molare Verhältnis der Metallverbindung i) zur Komponente ii) 0,01 : 1 bis 10 : 1, bevorzugt 0,1 : 1 bis 2 : 1, und das molare Verhältnis der Metallverbindung i) zur Säure iii) 0,01 : 1 bis 100 : 1, bevorzugt 0,05 : 1 bis 1 : 1 beträgt.

Die erfindungsgemäßen Copolymerisationsverfahren zur Herstellung von Kohlenmonoxidcopolymeren können sowohl absatzweise als auch kontinuierlich durchgeführt werden.

Als Reaktionsparameter zur Herstellung von Copolymeren aus Kohlenmonoxid und olefinisch ungesättigten Verbindungen haben sich Drücke von 100 bis 500000 kPa, vorzugsweise 500 bis 350000 kPa und insbesondere 1000 bis 11000 kPa, Temperaturen von -50 bis 400°C, bevorzugt 10 bis 250°C und insbesondere 40 bis 120°C als geeignet erwiesen. Die Temperatur bei der Copolymerisation kann ohne weiteres über einen Zeitraum von mehreren Stunden und auch länger im Bereich von 80 bis 120°C gehalten werden.

Die Polymerisationsreaktionen lassen sich in der Gasphase in Wirbelschicht oder gerührt, in Suspension, in flüssigen und in überkritischen Monomeren sowie in unter den Polymerisationsbedingungen inerten Lösungsmitteln durchführen.

Als Lösungs- bzw. Suspensionsmittel für die erfindungsgemäßen Verfahren sind insbesondere solche geeignet, die protisch sind oder die in Anteilen eine protische Komponente enthalten. Beispielsweise kommen niedermolekulare Alkohole, wie Methanol, Ethanol, i-, n-Propanol oder Wasser in Frage, bevorzugt wird Methanol als Lösungs-/Suspensionsmittel oder als Lösungsmittel-/ Suspensionsmittelkomponente verwendet.

Die Polymerisationsreaktionen können auch im praktisch alkohol- oder wasserfreien Polymerisationsmedium durchgeführt werden. Das bedeutet, daß dem Reaktionsgemisch aus Monomeren, Katalysator und gegebenenfalls inertem Lösungs- oder Suspensionsmittel keine weiteren Alkohol- oder Wasseranteile enthalten.

Geeignete inerte Lösungs- und Suspensionsmittel sind solche, die keine Hydroxylgruppe im Molekül enthalten, also Ether wie Diethylether, Tetrahydrofuran, aromatische Lösungsmittel wie Benzol, Toluol, Ethylbenzol, Chlorbenzol, aliphatische Kohlenwasserstoffe wie i-Butan oder chlorierte aliphatische Kohlenwasserstoffe wie Dichlormethan, 1,1,1-Trichlormethan oder Gemische der genannten Verbindungen.

Als gut geeignetes Polymerisationsverfahren hat sich die Vorlage des Katalysators im inerten Lösungsmittel und die anschließende Zugabe der Monomeren und Polymerisation bei einer Temperatur im Bereich von 40 bis 120°C und einem Druck im Bereich von 1000 bis 11000 kPa herausgestellt. Ebenso kann man die Monomeren und die Säure vorlegen und den Metallkomplex (I) anschließend, bevorzugt gelöst in einem alkoholischen Lösungsmittel wie Methanol oder einem ketonischen Lösungsmittel wie Aceton, unter den Reaktionsbedingungen zum Polymerisationsgemisch geben.

Weiterhin gut geeignet ist die Copolymerisation in Suspension in Gegenwart eines alkoholischen Suspensionsmittels, insbesondere Methanol, wobei der Metallkomplex (I), insbesondere Palladiumacetat, und eine Protonensäure, insbesondere p-Toluolsulfonsäure oder Schwefelsäure, vorgelegt und nach anschließender Zugabe der Monomeren die Polymerisation bei einer Temperatur im Bereich von 40 bis 150°C, insbesondere von 60 bis 130°C und einem Druck im Bereich von 1000 bis 11000 kPa durchgeführt werden.

Die beschriebenen Copolymerisationsverfahren können ebenfalls in Gegenwart eines Oxidationsmittels, wie Benzochinon oder Naphthochinon und/oder Wasserstoff durchgeführt werden.

Die erfindungsgemäßen Metallkomplexe (I) zeigen in den beschriebenen Copolymerisationsverfahren gute Katalysatorproduktivitäten, die auch bei längerer Polymerisationsdauer selbst bei hohen Polymerisationstemperaturen nicht abfallen.

Die erhaltenen Kohlenmonoxid-Copolymere weisen üblicherweise eine Viskositätszahl VZ (gemessen an einer 0,5 gew.-%-igen Lösung in ortho-Dichlorbenzol/Phenol (1:1)) im Bereich von 20 bis 300 auf. In der Regel werden VZ-Werte im Bereich von 40 bis 200 und auch im Bereich von 50 bis 150 erhalten.

Die Kohlenmonoxid-Copolymeren lassen sich mittels Spritzguß, Extrusion, Blasformen oder Spincoating verarbeiten. Außerdem gelingt die Beschichtung metallischer, keramischer und anderer Oberflächen, z.B. aus Kunststoffmaterialien.

Die erfindungsgemäßen Kohlenmonoxid-Copolymeren eignen sich zur Herstellung von Fasern, Folien, Formkörpern und Beschichtungen.

Über die erfindungsgemäßen Katalysatorsysteme auf der Basis von Metallkomplexen (I) besteht ein einfacher Zugang zu einer Vielzahl an geringfügig modifizierten Katalysatoren für die Copolymerisation von Kohlenmonoxid mit olefinisch ungesättigten Verbindungen. Weiterhin kommen halogenfreie, unproblematisch zu handhabende und leicht zugängliche, d.h. kostengünstige Ausgangsverbindungen zum Einsatz, so daß selbst ein umfangreiches Katalysatorscreening möglich wird.

### Beispiele

Die P³¹-NMR-Spektren wurden an einem Gerät DPX-250 der Firma Bruker aufgenommen. Als externer Standard wurde 85 %-ige Phosphorsäure verwendet.

### Abkürzungen:

Pd(OAc)₂: Palladiumdiacetat

### Beispiel 1: Bis(diphenylphosphinomethyl) (2,2,2-trifluorethyl)amin

Paraformaldehyd (7,5 g) wurde in Toluol (500 ml) suspendiert und bei 65°C mit 2,2,2-Trifluorethylamin (10 g) versetzt. Es wurde für 20 min bei 65°C gerührt, Diphenylphosphan (46,6 g) zugesetzt und die Reaktion 5 h unter Rückfluß gehalten. Anschließend wurde das Lösungsmittel im Vakuum entfernt und der Rückstand in Dichlormethan gelöst. Das Produkt wurde durch Zugabe von Ethanol, ggf. in der Kälte, ausgefällt, abfiltriert und nach Trocknen im Vakuum als weißer Feststoff erhalten (Ausbeute: 24,3 g); ³¹P-NMR:
δ = -27,2 ppm.

### Beispiel 2: Bis(diphenylphosphinomethyl) (2,4-difluorphenyl)amin

Paraformaldehyd (1,73 g) wurde in Toluol (500 ml) suspendiert und bei 65°C mit 2,4-Difluorphenylamin (3,6 g) versetzt. Es wurde für 20 min bei 65°C gerührt, Diphenylphosphan (10 ml) zugesetzt und die Reaktion 5 h unter Rückfluß gehalten. Anschließend wurde das Lösungsmittel im Vakuum entfernt und der Rückstand in Dichlormethan gelöst. Das Produkt wurde durch Zugabe von Ethanol, ggf. in der Kälte, ausgefällt, abfiltriert und nach Trocknen im Vakuum als weißer Feststoff erhalten (Ausbeute: 9,83 g); ³¹P-NMR:
δ = -26,3 ppm.

### B. Herstellung definierter Pd(OAc)₂-Komplexe (I)

a) Bis(diphenylphosphinomethyl)(2,2,2-trifluorethyl)amin-palladium-bis-acetat
   Pd(OAc)₂ (0,45 g) wurde in 50 ml entgastem Aceton gelöst, für 2 h bei Raumtemperatur gerührt und anschließend filtriert. Zur erhaltenen Lösung gab man Bis(diphenylphosphinomethyl)(2,2,2-trifluorethyl)amin (1,1 g), gelöst in 50 ml entgastem Aceton. Nach halbstündigem Rühren wurde die Lösung auf ein Volumen von 10 ml eingeengt, mit 100 ml Diethylether versetzt und die einsetzende Kristallisation mittels Eiskühlung unterstützt. Der sich bildende Palladiumchelatkomplex wurde abfiltriert, mit Toluol gewaschen und im Vakuum getrocknet. (Ausbeute: 0,62 g); ); ³¹P-NMR:
   δ = 8,6 ppm.
b) Bis(diphenylphosphinomethyl)(2,4-difluorphenyl)amin-palladiumbis-acetat
   Pd(OAc)₂ (0,45 g) wurde in 50 ml entgastem Aceton gelöst, für 2 h bei Raumtemperatur gerührt und anschließend filtriert. Zur erhaltenen Lösung gab man Bis(diphenylphosphinomethyl)(2,4-difluorphenyl)amin (1,16 g), gelöst in 50 ml entgastem Aceton. Nach halbstündigem Rühren wurde die Lösung auf ein Volumen von 10 ml eingeengt, mit 100 ml Diethylether versetzt und die einsetzende Kristallisation mittels Eiskühlung unterstützt. Der sich bildende Palladiumchelatkomplex wurde abfiltriert, mit Toluol gewaschen und im Vakuum getrocknet. (Ausbeute: 1,0 g); ); ³¹P-NMR:
   δ = 9,0 ppm.

### C. Colymerisationsverfahren

a) Kohlenmonoxid/Ethen- Copolymerisation im 0,3 l-Autoklaven
   In einem 0,3 l-Autoklav wurden 100 g Methanol, Bis(diphenylphosphinomethyl) (2,4-difluorphenyl)amin-palladium-bis-acetat (19 mg) und p-Toluolsulfonsäure (17 mg) vorgelegt. Es wurde mit einem Ethen/Kohlenmonoxid-Gemisch (1:1) ein Vordruck von 30 bar eingestellt, anschließend auf 85°C erwärmt und Ethen/CO bis zu einem Druck von 60 bar aufgepreßt. Die Temperatur und die Partialdrücke der Monomere wurden während der gesamten Reaktionsdauer konstant gehalten. Nach fünf Stunden unter den genannten Bedingungen wurde die Polymerisation durch Abkühlen und Entspannen des Autoklaven abgebrochen. Das Produktgemisch wurde filtriert und der Rückstand unter Vakuum getrocknet. Ausbeute: 45 g. Katalysatoraktivität = 16,6 kg(Kohlenmonoxidcopolymer)/g(Palladium)/h.
b) Kohlenmonoxid/Ethen/Propen-Terpolymerisation im 3,5 l-Autoklaven
   In einem 3,5 l-Autoklaven wurden Methanol (1,0 l), Propen (100 g) und p-Toluolsulfonsäure (0,175 mmol) vorgelegt. Danach wurden eine Reaktionstemperatur von 90°C und durch Aufpressen von Kohlenmonoxid/Ethen (1:1) ein Druck von 80 bar eingestellt. Unter diesen Reaktionsbedingungen wurde Bis(diphenylphosphinomethyl)(2,2,2-trifluorethyl)amin-palladium-bis-acetat (0,05 mmol), gelöst in 50 ml Methanol zudosiert. Die Temperatur und der Druck wurden während der gesamten Reaktionsdauer konstant gehalten. Nach 5 h Reaktionszeit wurde die Polymerisation durch Abkühlen und Entspannen des Autoklaven abgebrochen. Das Produktgemisch wurde filtriert und der Rückstand unter Vakuum getrocknet. Ausbeute: 371 g. Katalysatoraktivität = 13,95 kg(Kohlenmonoxidcopolymer)/g (Palladium)/h.
c) Kohlenmonoxid/Ethen/Propen-Terpolymerisation im 9 l-Autoklaven
   In einem 9 l-Autoklaven wurden Methanol (4,0 l), Propen (400 g) und p-Toluolsulfonsäure (0,7 mmol) vorgelegt. Danach wurden eine Reaktionstemperatur von 90°C und durch Aufpressen von Kohlenmonoxid/Ethen (1:1) ein Druck von 100 bar eingestellt. Unter diesen Reaktionsbedingungen wurde Bis(diphenylphosphinomethyl) (2,2,2-trifluorethyl)amin-palladium-bis-acetat (0,05 mmol), gelöst in 50 ml Methanol, zudosiert. Die Temperatur und der Druck wurden während der gesamten Reaktionsdauer konstant gehalten. Nach 6 h Reaktionszeit wurde die Polymerisation durch Abkühlen und Entspannen des Autoklaven abgebrochen. Das Produktgemisch wurde filtriert und der Rückstand unter Vakuum getrocknet. Ausbeute: 279 g. Katalysatoraktivität = 10,91 kg(Kohlenmonoxidcopolymer)/g(Palladium)/h.

Die reduzierte Viskosistätszahl VZ, bestimmt an einer 0,5 Gew.-%-igen Lösung in ortho-Dichlorbenzol/Phenol (1:1), des isolierten Kohlenmonoxidcopolymeren betrug 75 ml/g.

## Patentansprüche

1. Cis-verbrückter Metallkomplex der allgemeinen Formel (I) 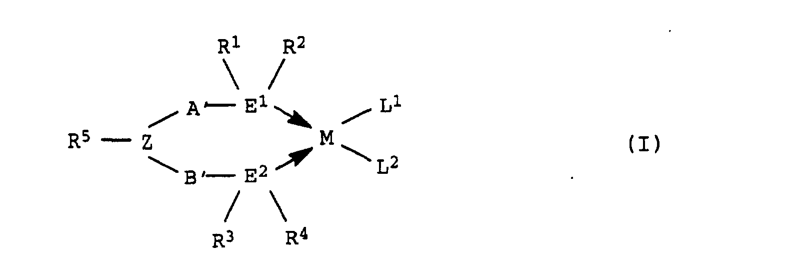 in welcher die Substituenten und Indizes die folgende Bedeutung haben:
R⁵ ein elektronenziehender Rest,
M ein Metall aus der Gruppe VIIIB des Periodensystems der Elemente,
E¹, E² ein Element aus der Gruppe VA des Periodensystems der Elemente,
Z Stickstoff oder Phosphor,
R¹ bis R⁴ Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
A', B' C₁-C₄-Alkyleneinheiten in substituierter und unsubstituierter Form, silylenverbrückte organische Reste sowie NR⁶-Reste,
R⁶ Wasserstoff oder Substituenten, ausgewählt aus der Gruppe bestehend aus C₁- bis C₂₀-kohlenstofforganischen und C₃- bis C₃₀-siliciumorganischen Resten, und
L¹,L² formal geladene Liganden.

2. Metallkomplex nach Anspruch 1, **dadurch gekennzeichnet, daß** der Rest R⁵ die folgende Bedeutung hat:
mit mindestens einer elektronenziehenden Gruppe substituiertes lineares oder verzweigtes C₁- bis C₂₀-Alkyl, wobei die elektronenziehende Gruppe sich in α-, β-, γ- und/oder δ-Position zu Z befindet;
mit mindestens einer elektronenziehenden Gruppe substituiertes C₆- bis C₁₄-Aryl oder -CN, -SO₂R⁹, -SO₃R⁹ oder -NO₂, mit R⁹ in der Bedeutung von C₁- bis C₁₀-Alkyl oder C₆- bis C₁₄-Aryl;
-C(O)R¹⁰ mit R¹⁰ in der Bedeutung von linearem oder verzweigtem C₁- bis C₂₀-Alkyl, C₆- bis C₁₄-Aryl, Aralkyl mit 1 bis 10 C-Atomen im Alkylteil und 6 bis 14 C-Atomen im Arylteil, mit mindestens einer elektronenziehenden Gruppe substituiertem linearen oder verzweigten C₁- bis C₂₀-Alkyl, wobei die elektronenziehende Gruppe sich in α-, β-, γ- und/oder δ-Position zur C(O)-Gruppe befindet, oder mit mindestens einer elektronenziehenden Gruppe substituiertem C₆- bis C₁₄-Aryl.

3. Verfahren zur Herstellung von Metallkomplexen der allgemeinen Formel (I) gemäß den Ansprüchen 1 bis 2, **dadurch gekennzeichnet, daß** man ein Metall M, ausgewählt aus der Gruppe VIIIB des Periodensystems der Elemente, das in Salzform oder als Komplexsalz vorliegt und formal geladene Liganden L¹ und L² trägt, mit Chelatliganden der allgemeinen Formel (II) 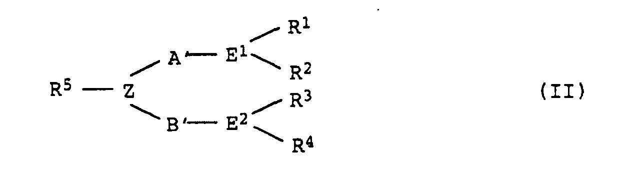 in welcher die Substituenten und Indizes die folgende Bedeutung haben:
R⁵ ein elektronenziehender Rest,
E¹, E² ein Element aus der Gruppe VA des Periodensystems der Elemente,
Z Stickstoff oder Phosphor,
R¹ bis R⁴ Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
A', B' C₁-C₄-Alkyleneinheiten in substituierter und unsubstituierter Form, silylenverbrückte organische Reste sowie NR⁶-Reste und
R⁶ Wasserstoff oder Substituenten, ausgewählt aus der Gruppe bestehend aus C₁- bis C₂₀-kohlenstofforganischen und C₃- bis C₃₀-siliciumorganischen Resten
in einem Lösungsmittel umsetzt.

4. Verwendung der Metallkomplexe gemäß den Ansprüchen 1 bis 2 als wesentliche Bestandteile von Katalysatorsystemen, die für die Copolymerisation von Kohlenmonoxid mit olefinisch ungesättigten Verbindungen geeignet sind.

5. Katalysatorsysteme, enthaltend als aktive Bestandteile
a) einen Metallkomplex der allgemeinen Formel (I) gemäß den Ansprüchen 1 bis 2 und
b) eine oder mehrere Lewis- oder Protonensäuren oder ein Gemisch von Lewis- und Protonensäuren.

6. Verwendung der Katalysatorsysteme gemäß Anspruch 5 zur Copolymerisation von Kohlenmonoxid mit olefinisch ungesättigten Verbindungen.

7. Verfahren zur Herstellung von Copolymerisaten aus Kohlenmonoxid und olefinisch ungesättigten Verbindungen, **dadurch gekennzeichnet, daß** die Copolymerisation in Gegenwart eines Katalysatorsystems gemäß Anspruch 5 durchgeführt wird.

8. Verfahren zur Herstellung von Copolymerisaten aus Kohlenmonoxid und olefinisch ungesättigten Monomerverbindungen, **dadurch gekennzeichnet, daß** die Monomeren in Gegenwart
i) eines Metalls M, ausgewählt aus der Gruppe VIIIB des Periodensystems der Elemente, das in Salzform oder als Komplexsalz vorliegt,
ii) eines Chelatliganden der allgemeinen Formel (II) 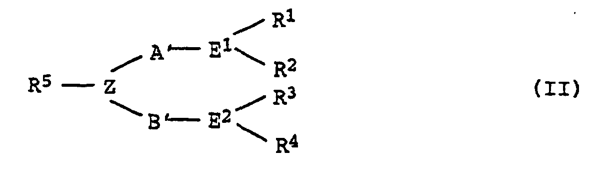 in welcher die Substituenten und Indizes die folgende Bedeutung haben:
R⁵ ein elektronenziehender Rest,
E¹, E² ein Element aus der Gruppe VA des Periodensystems der Elemente,
Z Stickstoff oder Phosphor,
R¹ bis R⁴ Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
A', B' C₁-C₄-Alkyleneinheiten in substituierter und unsubstituierter Form, silylenverbrückte organische Reste sowie NR⁶-Reste,
R⁶ Wasserstoff oder Substituenten, ausgewählt aus der Gruppe bestehend aus C₁- bis C₂₀-kohlenstofforganischen und C₃- bis C₃₀-siliciumorganischen Resten
und
iii) einer oder mehrerer Protonen- oder Lewissäuren oder eines Gemisches von Protonen- und Lewissäuren
polymerisiert werden.

9. Verwendung der gemäß den Ansprüchen 7 oder 8 erhaltenen Copolymerisate für die Herstellung von Fasern, Folien, Formkörpern und Beschichtungen.

10. Fasern, Folien, Formkörper und Beschichtungen aus Copolymerisaten erhalten gemäß den Ansprüchen 7 oder 8.

## Claims

1. A cis-bridged metal complex of the formula (I) 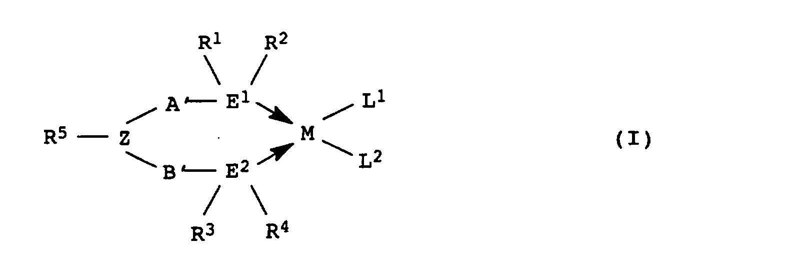 where:
R⁵ is an electron-withdrawing radical,
M is a metal of group VIIIB of the periodic table of the elements,
E¹, E² are each an element of group VA of the periodic table of the elements,
Z is nitrogen or phosphorus,
R¹ to R⁴ are substituents selected, independently of one another, from the group consisting of C₁-C₂₀-organocarbon and C₃-C₃₀-organosilicon radicals in substituted and unsubstituted form,
A', B' are C₁-C₄-alkylene units in substituted or unsubstituted form, silylene-bridged organic radicals or NR⁶ radicals,
R⁶ is hydrogen or a substituent selected from the group consisting of C₁-C₂₀-organocarbon and C₃-C₃₀-organosilicon radicals, and
L¹,L² are formally charged ligands.

2. A metal complex as claimed in claim 1, wherein R⁵ is:
linear or branched C₁-C₂₀-alkyl substituted with at least one electron-withdrawing group located in the α-, β-, γ- and/or 6-position relative to Z;
C₆-C₁₄-aryl substituted with at least one electron-withdrawing group or
-CN, -SO₂R⁹, -SO₃R⁹ or -NO₂, where R⁹ is C₁-C₁₀-alkyl or C₆-C₁₄-aryl;
-C(O)R¹⁰, where R¹⁰ is linear or branched C₁-C₂₀-alkyl, C₆-C₁₄-aryl, aralkyl having from 1 to 10 carbon atoms in the alkyl moiety and from 6 to 14 carbon atoms in the aryl moiety, linear or branched C₁-C₂₀-alkyl substituted by at least one electron-withdrawing group located in the α-, β-, γ- and/or 6-position relative to the C(O) grup or C₆-C₁₄-aryl substituted by at least one electron-withdrawing group.

3. A process for the preparation of metal complexes of the formula (I) as claimed in claim 1 or 2, which comprises reacting, in a solvent, a metal M selected from group VIIIB of the periodic table of the elements which is present in the form of a salt or a complex salt and carries formally charged ligands L¹ and L² with chelating ligands of the formula (II) 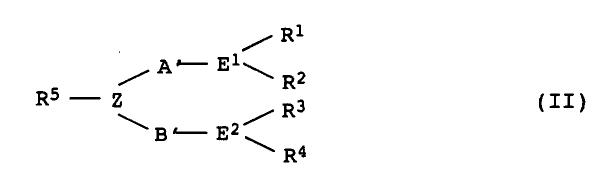 where:
R⁵ is an electron-withdrawing radical,
E¹, E² are each an element of group VA of the periodic table of the elements,
Z is nitrogen or phosphorus,
R¹ to R⁴ are substituents selected, independently of one another, from the group consisting of C₁-C₂₀-organocarbon and C₃-C₃₀-organosilicon radicals in substituted and unsubstituted form,
A', B' are C₁-C₄-alkylene units in substituted or unsubstituted form, silylene-bridged organic radicals or NR⁶ radicals, and
R⁶ is hydrogen or a substituent selected from the group consisting of C₁-C₂₀-organocarbon and C₃-C₃₀-organosilicon radicals.

4. The use of the metal complexes as claimed in claim 1 or 2 as essential constituents of catalyst systems suitable for copolymerizing carbon monoxide and olefinically unsaturated compounds.

5. A catalyst system comprising, as active constituents,
a) a metal complex of the formula (I) as claimed in claim 1 or 2 and
b) one or more Lewis acids or protic acids or a mixture of Lewis acids and protic acids.

6. The use of catalyst systems as claimed in claim 5 for copolymerizing carbon monoxide and olefinically unsaturated compounds.

7. A process for the preparation of copolymers of carbon monoxide and olefinically unsaturated compounds, which comprises conducting the copolymerization in the presence of a catalyst system as claimed in claim 5.

8. A process for the preparation of copolymers of carbon monoxide and olefinically unsaturated monomer compounds, which comprises polymerizing the monomers in the presence of
i) a metal M selected from group VIIIB of the periodic table of the elements which is present in the form of a salt or a complex salt,
ii) a chelating ligand of the formula (II) 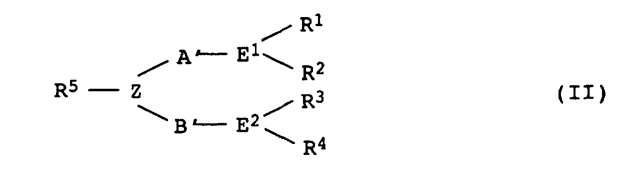 where:
R⁵ is an electron-withdrawing radical,
E¹, E² are each an element of group VA of the periodic table of the elements,
Z is nitrogen or phosphorus,
R¹ to R⁴ are substituents selected, independently of one another, from the group consisting of C₁-C₂₀-organocarbon and C₃-C₃₀-organosilicon radicals in substituted and unsubstituted form,
A', B' are C₁-C₄-alkylene units in substituted or unsubstituted form, silylene-bridged organic radicals or NR⁶ radicals,
R⁶ is hydrogen or a substituent selected from the group consisting of C₁-C₂₀-organocarbon and C₃-C₃₀-organosilicon radicals,
and
iii)one or more protic acids or Lewis acids or a mixture of protic acids and Lewis acids.

9. The use of a copolymer obtained as claimed in claim 7 or 8 for the preparation of fibers, sheets, moldings and coatings.

10. A fiber, sheet, molding or coating comprising a copolymer obtained as claimed in claim 7 or 8.

## Revendications

1. Complexes métalliques pontés en cis de la formule énérale (I) 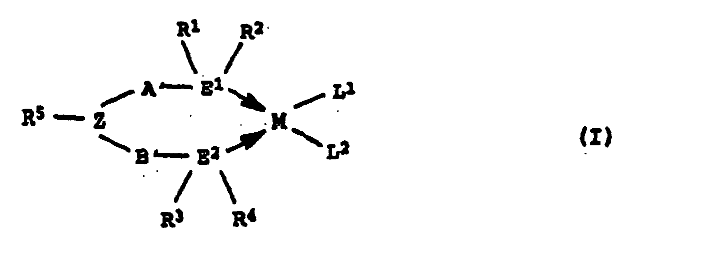 dans laquelle les substituants et indices ont les significations suivantes:
R⁵ est un reste électrophile,
M est un métal du groupe VIIIB du système périodique des éléments,
E¹, E² représentent un élément du groupe VA du système périodique des éléments,
Z est de l'azote ou du phosphore,
R¹ à R⁴ sont des substituants indépendants les uns des autres, choisis parmi des restes organocarbonés en C₁ à C₂₀ et des restes organosiliciques en C₃ à C₃₀ sous forme substituée ou non substituée,
A', B' sont des unités alkylène en C₁ à C₄ sous forme substituée et non substituée, des restes organiques à ponts de silyle ainsi que des restes NR⁶,
R⁶ représente de l'hydrogène ou des substituants choisis parmi le groupe formé par des restes organocarbonés en C₁ à C₂₀ et des restes organosiliciques en C₃ à C₃₀, et
L¹, L² sont des ligands à charge formelle.

2. Complexe métallique selon la revendication 1, **caractérisé en ce que** le reste R⁵ a la signification suivante:
un radical alkyle en C₁ à C₂₀ linéaire ou ramifié substitué par au moins un groupe électrophile, où le groupe électrophile se trouve en position α, β, γ et/ou δ par rapport à Z,
un radical aryle en C₆ à C₁₄ substitué par au moins un groupe électrophile ou
-CN, -SO₂R⁹, -SO₃R⁹ ou -NO₂, où R⁹ est un radical alkyle en C₁ à C₁₀ ou aryle en C₆ à C₁₄,
-C(O)R¹⁰, où R¹⁰ est un radical alkyle en C₁ à C₂₀ linéaire ou ramifié, aryle en C₆ à C₁₄, aralkyle comportant de 1 à 10 atomes de C dans la partie alkyle et de 6 à 14 atomes de C dans la partie aryle, alkyle en C₁ à C₂₀ linéaire ou ramifié substitué par au moins un groupe électrophile, où le groupe électrophile se trouve en position α, β, γ et / ou δ par rapport au groupe C(O), ou aryle en C₆ à C₁₄ substitué par au moins un groupe électrophile.

3. Procédé de préparation de complexes métalliques de la formule générale (I) selon les revendications 1 à 2, **caractérisé en ce que** l'on fait réagir, dans un solvant, un métal M, choisi dans le groupe VIIIB du système périodique des éléments, qui est présent sous forme de sel ou de sel complexe, et porte des ligands L¹ et L² à charge formelle, avec des ligands chélates de la formule générale (II) 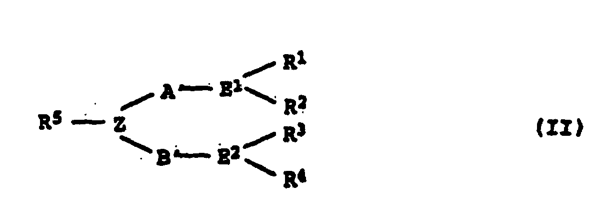 dans laquelle les substituants et indices ont les significations suivantes:
R⁵ est un reste électrophile,
E¹, E² représentent un élément du groupe V A du système périodique des éléments,
Z est de l'azote ou du phosphore,
R¹ à R⁴ sont des substituants indépendants les uns des autres, choisis parmi des restes organocarbonés en C₁ à C₂₀ et des restes organosiliciques en C₃ à C₃₀ sous forme substituée ou non substituée,
A', B' sont des unités alkylène en C₁ à C₄ sous forme substituée et non substituée, des restes organiques à ponts de silyle ainsi que des restes NR⁶, et
R⁶ représente de l'hydrogène ou des substituants choisis parmi le groupe formé par des restes organocarbonés en C₁ à C₂₀ et des restes organosiliciques en C₃ à C₃₀.

4. Utilisation des complexes métalliques selon les revendications 1 à 2 en tant que constituants essentiels de systèmes catalytiques convenant pour la copolymérisation de monoxyde de carbone avec des composés oléfiniquement insaturés.

5. Systèmes catalytiques contenant en tant que constituants actifs
a) un complexe métallique de la formule générale (I) selon les revendications 1 et 2, et
b) un ou plusieurs acides de Lewis ou protoniques, ou un mélange d'acides de Lewis et protoniques.

6. Utilisation des systèmes catalytiques selon la revendication 5 pour la copolymérisation de monoxyde de carbone avec des composés oléfiniquement insaturés.

7. Procédé de préparation de copolymères de monoxyde de carbone et de composés oléfiniquement insaturés, **caractérisé en ce que** la copolymérisation est entreprise en présence d'un système catalytique selon la revendication 5.

8. Procédé de préparation de copolymères de monoxyde de carbone et de composés oléfiniquement insaturés,. **caractérisé en ce que** les monomères sont polymérisés en présence de
i) un métal M, choisi dans le groupe VIII B du système périodique des éléments, qui est présent sous forme de sel ou de sel complexe,
ii) un ligand chélate de la formule générale (II) 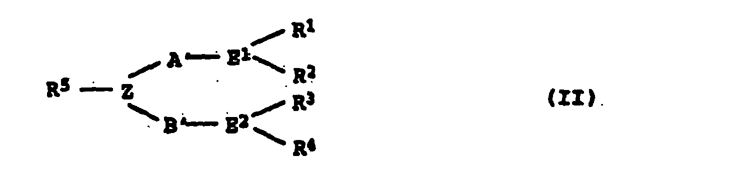 dans laquelle les substituants et indices ont les significations suivantes:
R⁵ est un reste électrophile,
E¹, E² représentent un élément du groupe V A du système périodique des éléments,
Z est de l'azote ou du phosphore,
R¹ à R⁴ sont des substituants indépendants les uns des autres, choisis parmi des restes organocarbonés en C₁ à C₂₀ et des restes organosiliciques en C₃ à C₃₀ sous forme substituée ou non substituée,
A', B' sont des unités alkylène en C₁ à C₄ sous forme substituée et non substituée, des restes organiques à ponts de silyle ainsi que des restes NR⁶, et
R⁶ représente de l'hydrogène ou des substituants choisis parmi le groupe formé par des restes organocarbonés en C₁ à C₂₀ et des restes organosiliciques en C₃ à C₃₀
et
iii) un ou plusieurs acides protoniques ou de Lewis ou un mélange d'acides protoniques et de Lewis.

9. Utilisation des copolymères obtenus selon les revendications 7 ou 8 pour la préparation de fibres, feuilles, corps façonnés et revêtements.

10. Fibres, feuilles, corps façonnés et revêtements à base de copolymères obtenus selon les revendications 7 ou 8.
